Europäisches Patentamt

European Patent Office

Office européen des brevets

(11) Publication number : **0 550 289 A2**

(19)

(12) # EUROPEAN PATENT APPLICATION

(21) Application number : **92311902.8**

(22) Date of filing : **31.12.92**

(51) Int. Cl.⁵ : **G06F 9/38**

(30) Priority : **02.01.92 US 815964**

(43) Date of publication of application :
**07.07.93 Bulletin 93/27**

(84) Designated Contracting States :
**AT BE CH DE DK ES FR GB GR IE IT LI LU MC NL PT SE**

(71) Applicant : **AMDAHL CORPORATION**
**1250 East Arques Avenue**
**Sunnyvale California 94086 (US)**

(72) Inventor : **Munson, Kenneth Kroymann**
**1901 Halford Avenue, Apt. 96**
**Santa Clara, California 95051 (US)**
Inventor : **Taylor, Michael Demar**
**2203 Emerald Hills Circle**
**San Jose, California 95131 (US)**

(74) Representative : **Crawford, Andrew Birkby et al**
**A.A. THORNTON & CO. Northumberland**
**House 303-306 High Holborn**
**London WC1V 7LE (GB)**

(54) **A mechanism to detect stores into the instruction stream.**

(57) A pipeline computer executes instructions in a plurality of pipeline segments where some instructions store into the instruction stream (STIS) STIS operations are detected and the pipeline is purged to avoid the use by the computer system of incorrect data. Detection of a STIS operation is done by comparing the current instruction address (CIA) to the next sequential instruction address (NSIA). A STIS address register (STAR) identifies addresses of all instructions in the pipeline. Although the STAR address is near to the NSIA, it does not necessarily match the next sequential instruction address. The STAR address is compared with the NSIA and performance is enhanced since not until the NSIA has been incremented to overlap the STAR address is a STIS condition is reported.

FIG.—6

Jouve, 18, rue Saint-Denis, 75001 PARIS

## BACKGROUND OF THE INVENTION

The present invention relates to the field of computers and particularly to computers having central processing units (CPU's) that operate in accordance with the IBM ESA/390 architecture.

One well-known computer operating with the IBM ESA/390 architecture is the Amdahl 5995-A computer. In that computer, the I-Unit pipeline is a six stage pipeline consisting of stages D, A, T, B, X, and W that process instructions.

The function of the D stage is to collate the necessary information to reference storage in the A, T, and B stages. The D-stage generates the effective address and selection of the access key to be used by the reference. The A, T, and B stages fetch operands/data using the current valid key.

One of the functions of the W (write) stage is to write results of operations to architecturally defined registers or storage. The W stage in the pipeline comes after the fetch-operands/data stages (A, T, and B) and the execution stage (X).

A current storage-reference instruction being processed in the pipeline can write new data to a target address immediately following the address of the current instruction itself. If the new data at the target address of the store is to be used in execution, the new data written to the target address must be used and not the old data at the target address. Due to pipeline processing, in certain high performance computers, execution using the old data at the target address commences before the new data is stored. Any such store into the instruction stream (STIS) must be detected so execution using the incorrect data can be prevented.

If a storage-reference instruction stores into the instruction stream of instructions already in the pipe, the subsequent storage-reference instructions in the pipe must be reprocessed to account for the changed data.

A computer operating in accordance with the above description is represented as follows in TABLE A:

```
                              TABLE  A

    I₁      storage (STIS)        D A T B X W              (flow 1)
    I₂      storage reference       D A T B                Invalid
    I₃         .                      D A T                Invalid
    I₄         .                        D A                Invalid
    I₅         .                          D                Invalid
    R       re-I-Fetch I₂
    I₂      execute storage reference      D A T B X W     (flow 2)


                      ----- time ----->
```

The storage reference instructions that follow the STIS instruction in the pipeline become invalid. Therefore, referring to TABLE A, flow 1 executes the STIS instruction which updates the data in the W stage of the I₁ instruction and the new value of the data is available for use one cycle after it has been updated in the W segment of I₁. Since the next instruction, I₂, is a storage reference, it may require access to the data stored by I, that only becomes available after the W segment of instruction I₁. The I₂ instruction cannot commence its D segment until after it is refetched which starts no sooner than the W stage of I₁. Therefore, I₂ is significantly delayed.

Where instructions store into the pipeline, all of the subsequent instructions in the instruction queue (I₂, I₃, I₄, I₅ in TABLE A) can be invalid, but they are not necessarily invalid in every case. If the new data at the target address of the I₁ store is to be executed in any subsequent instruction, only the new data must be used. If any subsequent instruction has begun processing using the old data at the target address, the processing is invalid. Any store into the instruction stream (STIS) must be detected so execution with the incorrect old data can be prevented.

In order to detect a STIS conditions, prior art computers compared the operand address of the current store operation with the instruction address of the instruction at the beginning of the pipeline. To cover instructions that may have already been fetched, a group of addresses surrounding the instruction at the beginning of the pipeline was checked against the operand address. The group was large enough to include any instructions in early stages of the pipeline or in the instruction fetch platform.

In prior art computers, the STIS condition was detected over a large window of addresses and hence tended to detect a large number of STIS conditions. Previously, STIS was checked by comparing the address in the data address registe (DAR) to the address in the T-segment operand address register (TOAR). The DAR contained the current instruction address and the TOAR contained the store address. If the TOAR was within a certain range of the DAR, a STIS condition would result, causing a re-I-fetch. Although it is only necessary to have the correct data for instructions actually executed, the prior art detected a STIS condition even when the data was not to be actually used. For example, a branch instruction preceding the target of the STIS instruction could branch around the STIS instruction. Although the old data would not be used because of the branch, the STIS condition was indicated because the data was within the large window of addresses. This imprecise detection of STIS events costs significant performance loss since many instruction periods are lost after a STIS condition as indicated in TABLE A.

In accordance with the above background, there is a need for an improved computer system which operates more efficiently and does not waste as much time as a result of STIS instructions.

SUMMARY OF THE INVENTION

The present invention is a pipeline computer system having a number of instructions, $I_1$, $I_2$, ..., $I_C$, ..., $I_J$ processed in a pipeline where $I_1$ is the current one of the instructions being introduced into the pipeline. The instructions are executed in a plurality of pipeline segments, including the segments $S_1$, $S_2$, ..., $S_W$. In some operations, stores into the instruction stream (STIS) occur and such STIS operations are detected to avoid the use by the computer system of incorrect data.

The computer system includes a current address register for storing the address of the current instruction and includes a next sequential instruction address register (NSIAR) for storing the address of the next sequential instruction. Detection of a STIS operation is done by comparing the current instruction address (CIA) to the next sequential instruction address (NSIA).

For a store operation writing new data from the current instruction to a following instruction is done by comparing the current instruction address (CIA) to the next sequential instruction address (NSIA). If any part of the range from the <current address> to the <current address + store length> is in the range of the NSIA to the NSIA+6 (the maximum length of an instruction), the store operation will alter the next instruction. Under these conditions, a STIS condition is detected and a control signal is provided for signaling that the instructions in the pipeline are to be purged so that any execution of invalid instructions ceases.

A STIS address register (STAR) is provided to identify all instructions in the pipeline. In one six-stage pipeline embodiment, a 6-bit register with associated validity bits is provided to cover the maximum number of instructions that can be in the six-stage pipeline and the instruction fetch platform. The STAR address is near but does not necessarily match the next sequential instruction address (NSIA). When valid, the STAR points to the address of a potential STIS condition. As instructions are executed sequentially, the NSIA value is incremented. The STAR, when valid, is compared with the NSIA. Once the NSIA has been incremented to overlap the STAR, a STIS condition is reported. If a branch instruction causes a jump to a different instruction stream, the STAR is invalidated and a STIS condition is not reported. Note that if the STAR is valid, and another store operation occurs which stores data between the STAR and the NSIA, the STAR is updated to reflect the first address in the instruction stream that has been changed.

Usage of the STAR ensures that the target of a STIS is not updated until it is about to be executed. This greatly reduces the number of unnecessary corrections to the instruction fetch platform data, thereby improving performance.

The foregoing and other objects, features and advantages of the invention will be apparent from the following detailed description in conjunction with the drawings.

BRIEF DESCRIPTION OF THE DRAWINGS

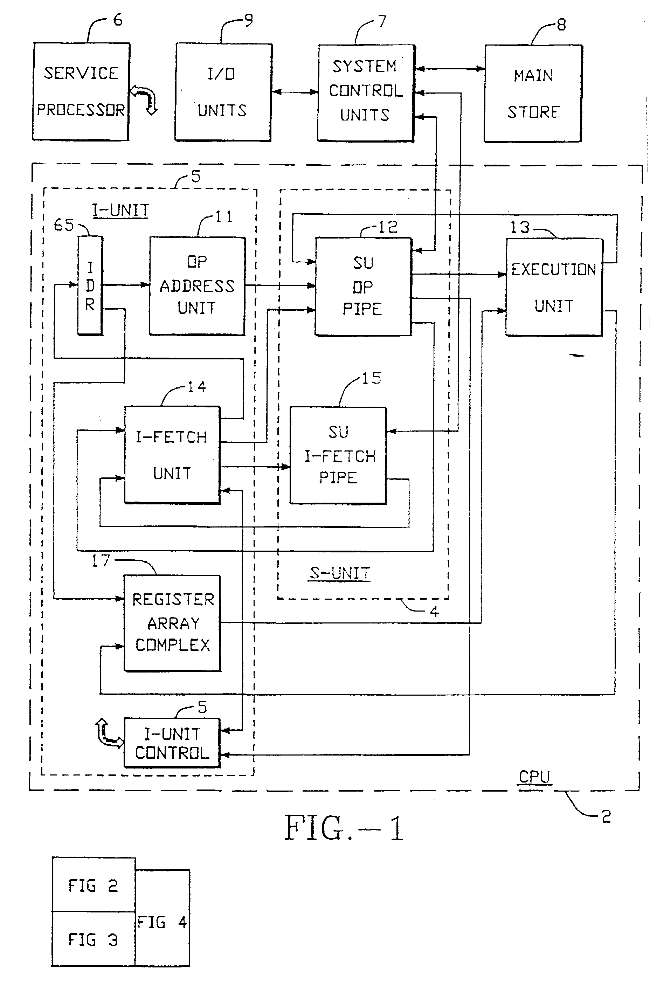

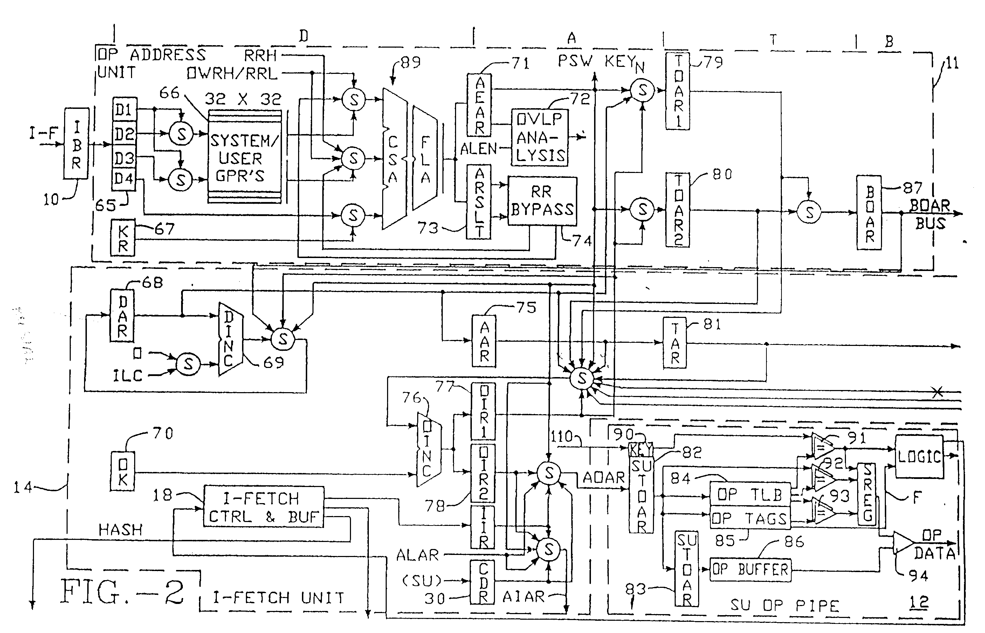

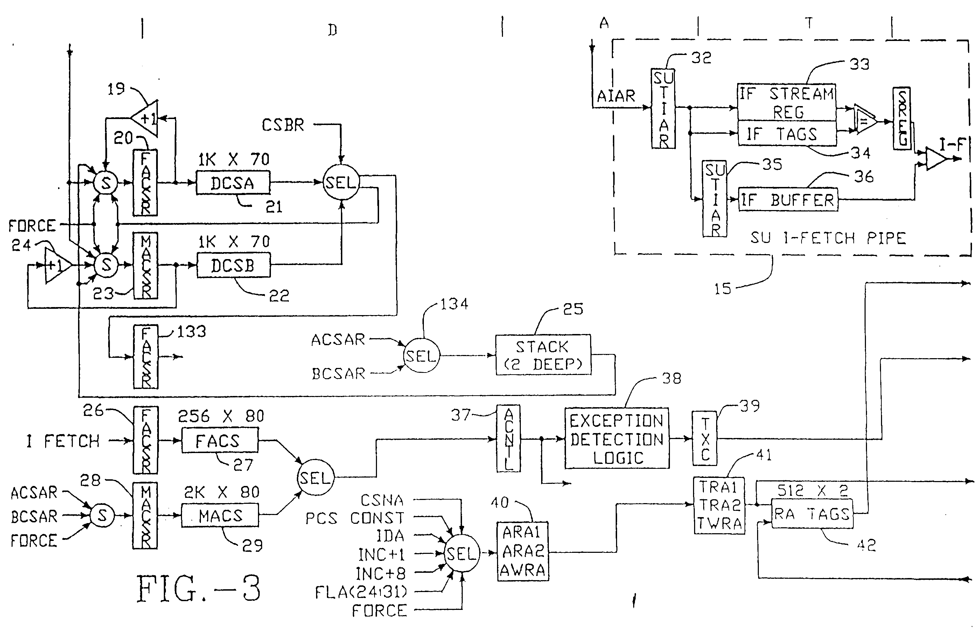

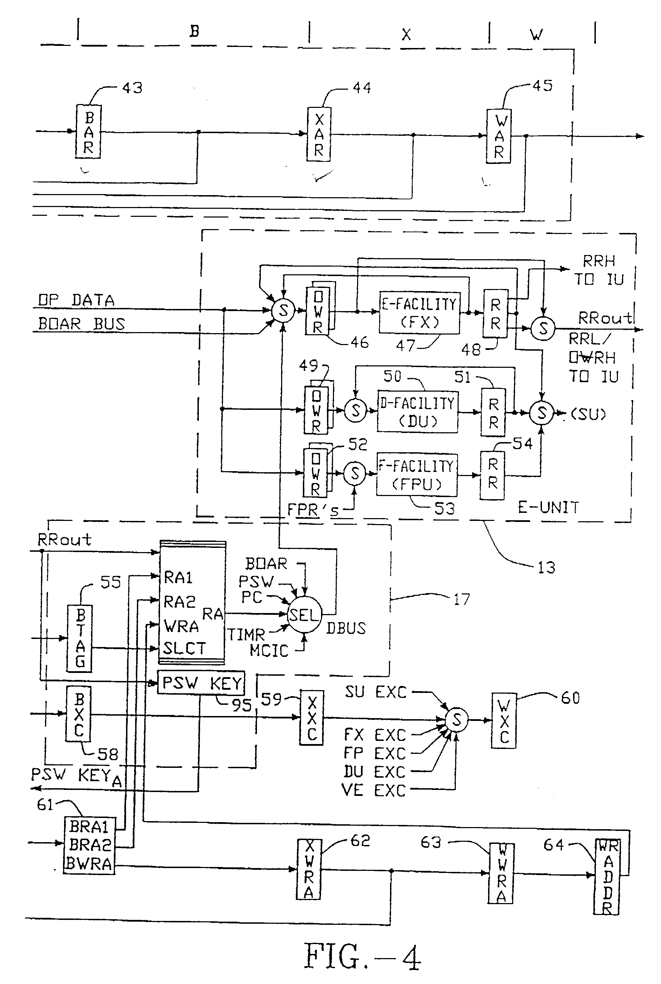

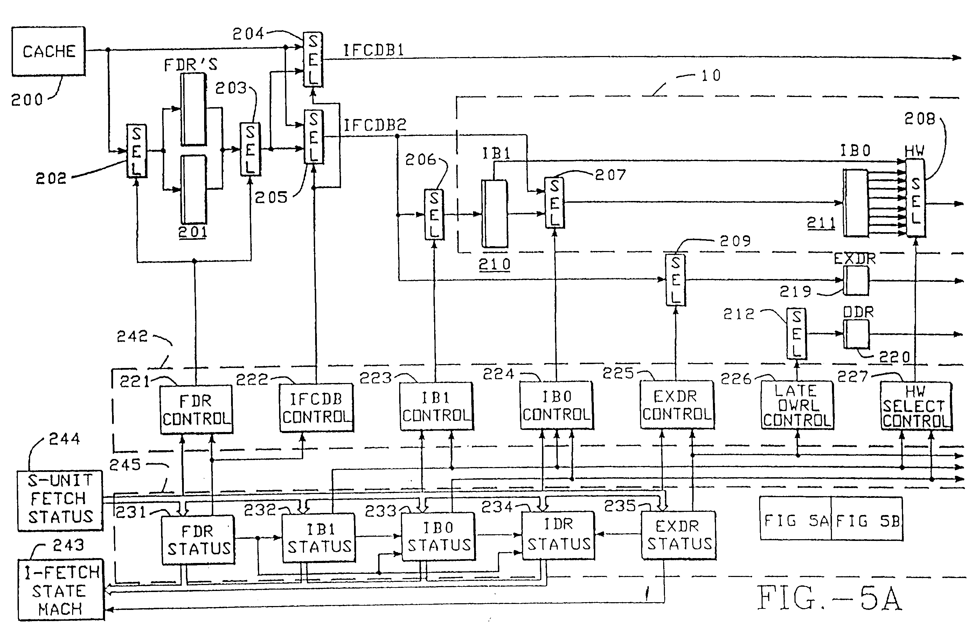

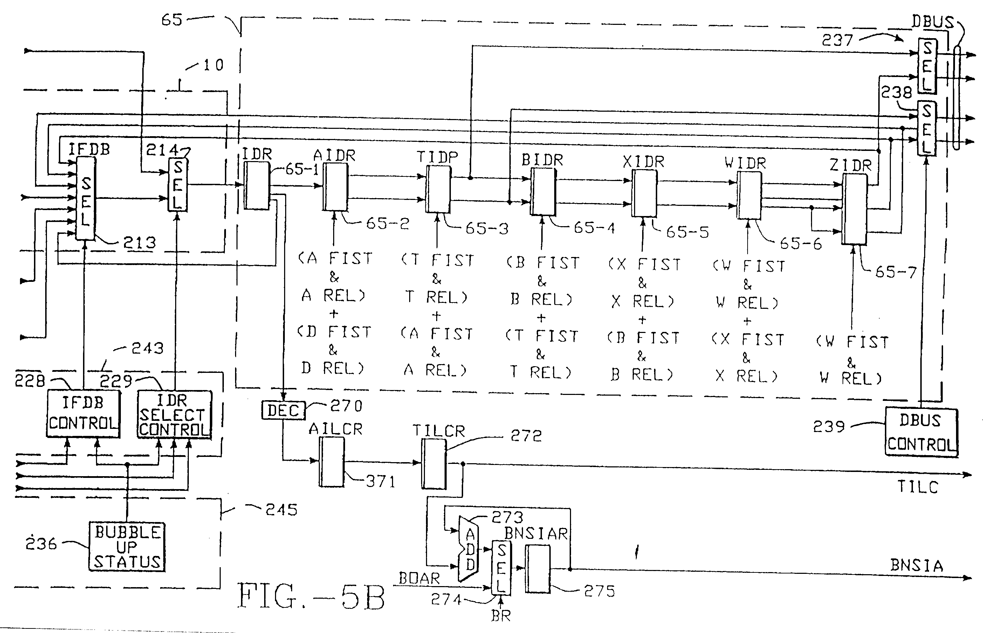

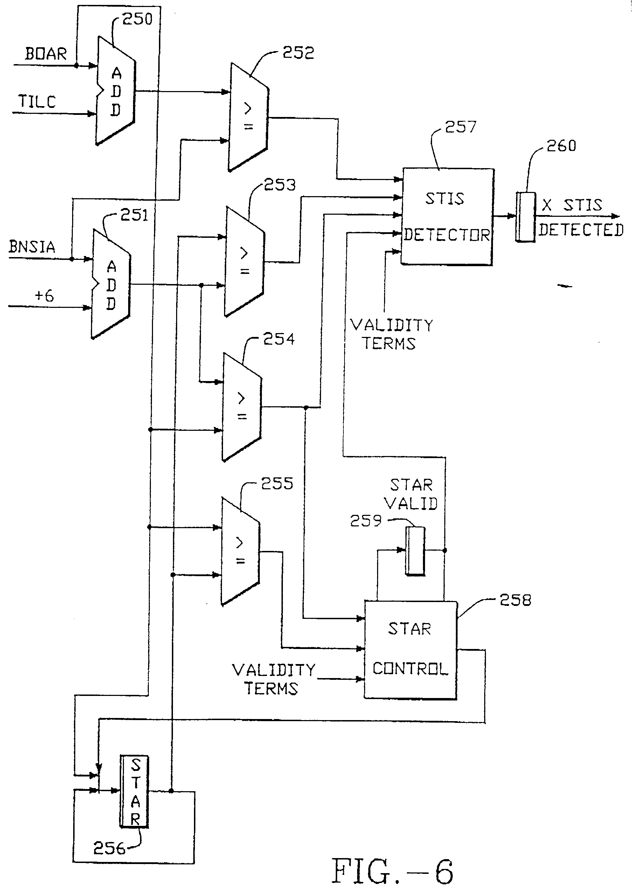

FIG. 1 depicts an overall block diagram of a computer system incorporating the present invention.

FIG's. 2, 3 and 4 depict detailed block diagrams of the FIG. 1 system.

FIG's. 5A and 5B depict a block diagram of the I-Fetch data and control circuitry that forms part of the FIG. 1 system.

FIG. 6 depicts a detailed block diagram of the STIS control circuitry used in connection with the FIG. 5 circuitry.

## DESCRIPTION OF THE PREFERRED EMBODIMENTS

### Overall Computer System - FIG. 1

In FIG. 1, a computer system compatible with the Amdahl 5995-A computer operating in accordance with the ESA/390 architecture is shown. The computer system of FIG. 1 includes an instruction unit (I-unit) 5, a storage unit (S-Unit) 4, an execution unit (E-Unit) 13, system control units 7, I/O units 9, main store 8, and a service processor 6. The instruction unit 5 includes an operand address unit 11, an instruction data register 65, an I-fetch unit 14, a register array complex 17, and an I-unit control 3. The storage unit 4 includes an SU Op Pipe 12 and an SU I-Fetch Pipe 15.

The FIG. 1 system features two machine states, User State and Control State. In User State, supersets of the IBM ESA/390 architecture are supported. Some User State operations may be emulated by Control State software. The architecture provides support for Control State Software to implement the "Multiple Domain Facility" (MDF). MDF provides for multiple computing systems to exist in User State on one processor complex. This operation is accomplished by providing each virtual computing system (domain) with its own private main storage, channels, operator console, and optionally expanded storage, while multiplexing all domains on the CPU resources available to the processor complex.

Control State is for controlling system resources and they may be shared by multiple domains and may provide emulation. Emulation is often used for enhancing the IBM ESA/390 architecture or for enabling User State programs that run on one manufacturer's machines to run on another manufacturer's machines. Control State operation is based on the IBM ESA/390 architecture. Entry to Control State from User State is vectored, invoked by Control Interceptions that require assistance by Control State software.

Transitions between User State and Control State occur under a number of conditions. For example, transitions occur when an instruction occurs that is defined as an emulated instruction, when an instruction occurs for which a specific interception control is set, when an interruption occurs for which a specific interception control is set, and when an interruption occurs that is defined as a mandatory Control Interception.

In the FIG. 1 system, there are two types of units of operation, the domain unit of operation (DUO) and the machine unit of operation (MUO).

In the FIG. 1 system, the architectural register sets are defined as follows: access registers (AR), floating point registers (FR), general registers (GR), Control State and domain AR MAP registers (MR), register array (RA), and vector registers (VR). Other individual registers, such as the program status word (PSW), are also defined. In the FIG. 1 system, the various ones of the architectural registers are implemented in a register array.

In FIG. 1, the main Store 8 contains a system storage area where Control State software and the Hardware System Area (HSA) reside, and domain storage area(s), one for each domain. Each storage area is a separate address space, or address dimension, that is, for example, up to 2 GB in size. Mapping of these address spaces to physical main storage is via blocks of storage that are 2 MB or larger.

In the FIG. 1 system, the register array (RA) Complex 17 includes 256 word registers that are under control of Control State instructions. A specific RA register is identified by an 8-bit operand field in these instructions. Defined RA registers have two identifications: the functional name (for example GR0) and their register offset in the register array (for example RA(C0)). In addition to using one of the RA-manipulation instructions, some RA registers can be accessed directly by unique instructions that manipulate the functional registers (for example domain CRs can be loaded using the LCTL instruction). For such registers, there may be a preference in the means of access. For example, loading the RA copy of the system prefix has no effect on prefixing; the SPX instruction should be used. Note that the RA registers are not necessarily changed by an instruction addressing the register; some (for example the User State Old PSWs) can be changed due to an interruption or CI. The RA contains most architecturally-defined registers and controls, including Control State prefix, domain-native prefix, guest prefix, DAC, feature control bits, general and control registers.

The architectural registers that are not in the same physical register array but are in the register array complex are listed as follows:

The Control State PSW is not in the RA. The host PSW to be saved in the interpretive-execution mode is also not maintained in the RA; it is saved in the LPSD. (Note that although the domain-native and guest PSWs are provided in the RA for CSSW to inspect and modify, the instruction-address field (bits 33: 63 ) is invalid).

The host GRs 14 and 15 defined to be saved in the interpretive-execution mode are not maintained in the RA; they are saved in the LPSD. (Note that the User State and Control State GRs are in the RA).

There is one set of FRs provided in User State, and they are not contained in the register array.

In FIG. 1, main storage 8 contains (1) a system storage area where Control State software (instructions and data) and the Hardware System Area (HSA) reside, and (2) domain storage area(s), one for each domain. Mapping of these address spaces to physical main storage is via blocks of storage that are 2 MB or larger. A domain's storage area is accessed using domain addresses. In User State, addresses are domain addresses of the current domain. In Control State, CPU generated addresses are generally system addresses. However, under the control of the Domain Access Controls register, some operand effective addresses are treated as domain addresses.

In Control State, CSSW can select either User PSW<AS> and PSW<T> to determine the mode of accessing main storage, or it may choose to use another set of three bits to determine the mode of accessing main storage, which can be different from the current one, as specified by the user PSW.

DETAILED SYSTEM - FIG's. 2, 3, 4

In FIG's. 2, 3 and 4, further details of the computer system of FIG. 1 are shown with an orientation as depicted in the lower right-hand corner of FIG. 1. The computer system operates in a pipelining fashion where operation is divided into a number of segments including P, A, T, B segments followed by D, A, T, B, X, and W segments. The units of FIG's. 2, 3, and 4 operate generally over the D, A, T, B, X, and W segments after a current instruction is loaded into the IDR register 65. To load an instruction, the P segment performs priority resolution, the A segment performs instruction address presentation, the T segment performs TLB lookup, and the B segment loads the current instruction into the IDR register 65.

In FIG. 2, the I-Unit 5 fetches instructions into the instruction data register (IDR) 65 which are to be processed in a pipeline fashion. Up to six instructions, for example instruction $I_1$, $I_3$, $I_4$, $I_5$, and $I_6$ can be processing in the FIG's. 2, 3, and 4 units in the D, A, T, B, X, and W segments.

In FIG. 2, the I-fetch unit 14 fetches instructions and stores them into the IDR 65 and delivers them to the storage unit Op Pipe 12 and the storage unit I-fetch pipe 15 to maintain a flow of instructions to be executed. The units of FIG. 2 cooperate with the register array complex 17 for controlling the flow of instructions and operands in the pipeline execution of the computer system.

The I-fetch unit 14 pre-fetches each instruction into the instruction data register IDR 65 so that when the D segment commences, the I-fetch unit 14 has finished for the current instruction, for example instruction $I_1$, and is pre-fetching subsequent instructions for example instructions $I_2$, $I_3$, $I_4$, $I_5$, $I_6$ and I. The I-fetch unit 14 during prefetching interacts with the storage unit 4 during the P, A, T, B segments that all precede the D, A, T, B, X, and W segments.

The computer system provides instructions $I_1$, $I_2$, $I_3$, ..., $I_J$, where "J" is an integer, that are executed in a plurality of pipe-line segments, including at least the segments $S_1$, $S_2$, ..., $S_K$, ..., $S_W$ where "K" and "W" are integers. In the embodiment described, the segments are P, A1, T1, B1, D, A2, T2, B2, X, and W corresponding to $S_1$, $S_2$, ..., $S_K$, ..., $S_W$, respectively, so that $S_K$ corresponds to A2 and $S_W$ corresponds to W. The computer system stores data in the W segment $S_W$.

In FIG. 2, the IDR 65 provides information to the operand address unit 11. The operand address unit 11 determines addresses information to be processed by instructions. The addresses of operands are passed to the storage unit of operand pipe 12 which fetches the operands which are to be operated upon and delivers them to the execution unit 13. The execution unit 13 performs arithmetic and logical functions on the operands such as add, multiply, divide, move, or, and shift in a conventional manner.

After prefetching, the D segment is the decode cycle for instruction decoding of the instruction in IDR register 65.

The A segment is address presentation for the S-unit 4. The T segment is a translation TLB lookup cycle for a translation look-aside buffer (TLB). The B segment is the buffer cycle when, if a correct translation occurred in the TLB and if the line of data addressed is in the cache, the data is accessed and latched into the operand word register OWR (46, 49, 52). The X segment is for execution in the E-Unit 13 which takes data from the OWR, executes on the data and places the result in the result register (48, 51, 54). The W segment is for writing the results to the location specified by the instruction, for example, to an internal register in register array complex 17 or back to main storage 8.

Referring to FIG.'s 2, 3, and 4 the instruction data register 65 is loaded by the I-fetch unit 14 as described in connection with FIG. 5. The instruction data register provides the instruction in four fields, D1, D2, D3 and D4. The contents of the register 65 in turn are selected into the system/user general purpose registers 66 (GPR's). The contents of the general purpose registers are selected into the three-input adder 89. The adder 89 forms the effective address in the A segment and loads it into the AEAR effective address register 71 and into the ARSLT result register 73. The contents of the effective address register 71 are present in the A segment and are used, among other things, to access the storage unit Op pipe 12 to obtain an operand from the storage unit. The contents are also stored into the T operand address registers 1 and 2, TOAR1 79 and TOAR2 80 in the T segment. The contents of the registers 79 and 80 are passed to the B segment operand address register BOAR 87. The storage unit Op pipe 12 includes a register 90 which is loaded with the PSW Key which is to be used for key protection checking when the storage unit is accessed. The key from the register 90 is compared in comparator 91 with a key from the OP TLB unit 84 to determine if a key match exits. The other portions of the TLB including the OP tags 85 and OP buffer 86 are also compared in comparators 92 and 93 and the results of all comparators 91, 92 and 93 are further detected in comparator 94 to provide the TLB match output signal when all the required matches are present. If the key match from comparator 91 is not asserted, meaning that the key from register 91 does not match the key from the TLB unit, then the TLB match signal from comparator 94 is not asserted meaning that a protection key violation has occurred. If the keys do match and all the other required matches are also present, the TLB match signal is asserted indicating that, among other things, no key protection violation has occurred.

## Instruction Fetch Platform - FIG. 5

In FIG. 5, further details of the I-Fetch Unit 14 of FIG. 1 are shown. In FIG. 5, the IDR Register 65 of FIG. 2 is expanded and is shown together with the circuitry for loading the IDR 65 with a sequence of instructions such as shown in TABLE A above.

In FIG. 5, the IDR 65 is loaded from the storage unit cache 200 or the FDR's 201. Selection of instructions into the FDR's 201 is under control of the selector 202 which in turn is controlled by the FDR control 221. Selection of instructions from the cache 200 or the FDR's 201 is under control of the selection gates 204 and 205 which in turn are controlled by the IFCDB control 222. Selection of instructions from the FDR's 201 is under control of the selection gate 203 which in turn is controlled by the FDR control 221. Selection gate 206 controls selection of the selected output of selector 205 into the IB1 buffer register 210. Selector 206 is under the control of the IB1 control 223. The selection from the buffer register IB1 or from the selector 205 is under control of the selector 207 which in turn is controlled by the IB0 control 224. The selected instruction selected by selector 207 is latched in the buffer register IB0 211. Selection of the contents of the IB0 register 211 by selector 208 is under control of the HW select control 227 and selector 208 in turn feeds the selector 213 which is under control of the IFDB control 228. The output from selector 213 or from the cache through selector 204 is under control of selector 214 which in turn is controlled by the IDR select control 229. The selected instruction from selector 214 is input to the IDR 65 which is staged through the IDR 65 stages IDR, AIDR, TIDR, BIDR, XIDR, WIDR, and ZIDR labeled 65-1, 65-2, 65-3, 65-4, 65-5, 65-6 and 65-7, respectively. The output form the ZIDR stage of the IDR 65 is selected by the selectors 237 and 238 is the DBUS of the Op Address Unit of FIG. 2.

In FIG. 5, a decoder 270 decodes the instruction length count, ILC, from the instruction in the D-segment instruction data register (IDR). The ILC is latched into the AILC register 271 and staged to the TILCR register 272 for the T-segment. The T-segment ILC, TILC, is added in adder 273 to the contents of the BNSIAR register 275 to form the next seqential instruction address (NSIA) which is stored back into the BNSIAR register 275. When a branch or other condition (BR) indicates that the next instruction in the sequence determined by adding the ILC to the current instruction is not the next instruction, the BNSIAR is loaded directly from the BOAR 87 of FIG. 2 under control of selector 274. The B-segment next sequential instruction address, BNSIA, is determined one instruction flow ahead of the current instruction in the pipeline. The BNSIA in the BNSIAR is a predicted value based on instruction length count.

In FIG. 5, control of the selection of which instructions to feed into the IDR register 65 is under the selection controls 221 through 229 in control unit 242. These controls receive status information from status unit 245 which is loaded by the S-unit Fetch Status 244. Status unit 245 also provides status to the IFETCH state machine 243. The S-unit Fetch Status 244 loads the FDR status 231, IB1 status 232, IB0 status 233, IDR status 234, EXDR status 235 and the BUBBLE UP STATUS 236 in the the status unit 245. The different status and control conditions and related circuits for a main frame computer are extensive, and many of the details related thereto are not relevant to the present invention, but such details can be found, for example, in the Amdahl 5995-A computers. The particular control and status conditions which are relevant for selecting instructions in connection with the present invention will be described in detail hereinafter.

## STIS Circuitry -- FIG. 6:

In FIG. 6, further details of the STIS circuitry are shown. The adder 250 receives the B segment operand register contents from the BOAR 87 of FIG. 2 and adds the address from the BOAR register 87 to the storage length in the adder 250. The output from the adder 250 is one input to the comparator 252 which compares the length of addresses from adder 250 with the BNSIAR value in a greater than or equal to comparator 252. The comparison output from comparator 252 is input to the STIS detector 257.

A adder 251 adds +6 to the BNSIAR value and provides the added output to comparators 253 and 254. Comparator 253 compares the value from STAR register 256 with the +6 value from adder 251 and provides the comparison output to STIS detector 257.

The comparator 254 compares the +6 incremented BNSIAR value through adder 251 with the BOAR value. The results of the comparison from comparator 254 are provided as an input to the STIS detector 257 and to the STAR control 258. The comparator 255 compares the STAR register 256 value with the BOAR value and the results of the comparison are input to the STAR control 258. The STAR control 258 provides ar. output to the STAR valid register 259 which in turn provides an input to the STIS detector 257 and to STAR control 258.

The STAR control 258 controls the entry of values into the STAR register 256.

The STIS detector 257 detects a STIS condition and loads that condition into the register 260 in the X segment which provides the X STIS DETECTED signal. The X STIS DETECTED signal is used in the circuit of FIG. 5 to control the initiation of a STIS operation which purges the pipeline.

## General Operation

Operands are fetched after the D and A segments at the addresses set by the A segment into the TOAR1 79 or the TOAR2 80 registers of FIG 2. From there the operand addresses are latched into the BOAR register 87. At the same time, the next sequential instruction (NSI) is processed and loaded into the BNSIAR registers 275.

At all times in all valid B segments, the BNSIAR 275 stores the address of the next sequential instruction. 91 using prediction the next sequential instruction is known in the B segment such that it can be compared with the operand in the operand address register, BOAR 87. The next sequential instruction is compared with the operand address to see if they are close enough to be a STIS condition or a potential STIS condition.

Normally, not until the end of the B cycle of a current instruction is the next instruction address known. The current instruction address is latched into the XAR register in the current instruction. However, the address is determined a whole cycle earlier at the end of the T cycle, so that the address stored into the BNSIAR register 275 for one instruction will appear in the XAR register one instruction time later.

If the instruction in the B cycle in a branch, however, the next sequential instruction address in the BNSIAR register may not be correct. If the branch is taken, the BNSIA address from the BNSIAR register 275 may never be used.

The predicted next sequential instruction with an address in the BNSIAR register 275 will be the next instruction unless a branch is taken. If a branch is taken, then the predicted instruction in the BNSIAR register never is latched into the XAR register. For a taken branch instruction, the pipeline is purged.

At the end of the T cycle, the BOAR register 87 and the BNSIAR register 275 are loaded. The contents of those registers during the B cycle are compared in the B cycle STIS analysis logic of FIG. 6. That logic has an output, X STIS DETECTED indicating that a STIS condition was detected which causes an interrupt to be taken which purges the pipeline.

Several comparisons are made to determine if addresses are within a very close range and, if they are, then a STIS condition is indicated immediately assuming that the current instruction is storing into the next instruction. If not within a very close range, but within a reasonably close range, (128 bytes), then a potential STIS exists and the BOAR store address is latched into the STAR (STIS Address Register) 256 of FIG. 6.

The control logic for loading the STAR register 256 is of two types, one that detects a STIS immediately and one that detects a STIS condition from a previously loaded STAR.

The format for the STAR register is six bits, 25-30. The seventh bit merely indicates whether any of the higher order bits are populated. Whenever a STAR is loaded is relatively close to the instruction stream, the seventh bit indicates whether the STAR is in the same 128 byte block as the BNSIAR address or in the next block.

The STAR register records the closest next instruction that has been written. The actual detection in the pipeline is done in the B cycle for the instruction before the STAR instruction. If the current instruction completes in the pipeline, before the next instruction is ready, an interrupt is taken to flush the next instruction and all subsequent instructions that have been prefetched and they are refetched from the cache or main memory as with all purging interrupts.

## 1. STIS Operation - FIG. 6

The I-Unit 14 and particularly FIG. 6 must check any store against the current instruction operation and any instructions that follow. Any store to an address on the I-Fetch platform of FIG. 5 invalidates the data that was fetched or that is in the process of being fetched. The new data must be fetched before use (re-I-fetch).

The STIS detection checks the instruction just before its use to ensure the data has not been altered since it was fetched. STIS uses the B-cycle Next Sequential Instruction Address Register (BNSIAR) 275 of FIG. 2.

This register holds the address that will be loaded into the XAR (the first implemented register of the staging platform) assuming sequential operation. Since a branch would cause a re-I-fetch and thereby eliminate any possible STIS, only the sequential case must be checked.

There are two methods to detect a STIS condition. The first method compares the BNSIAR with the BOAR and is useful when the next instruction address is known. If the range specified by the BOAR and the BOAR + Store Length (from adder 250 of FIG. 5) overlaps the range specified by the BNSIAR and the BNSIAR + 6 (from adder 251 of FIG. 5), there is a STIS condition resulting from a STORE to the instruction that will (most likely) enter the X-cycle next if there is no branch. Since the maximum instruction length is 6 bytes for SS and SSE instructions, a STIS to the next instruction is sure to be detected. However, the next instruction could have a shorter length, and the STIS detected doesn't necessarily apply to that next instruction. This STIS detected signal is sent in the X-cycle to cause a re-I-fetch in the normal manner that re-I-fetches are caused or in a computer system.

The second method protects against addresses that have been fetched but that cannot be the next instruction. Each STORE range is compared to the range specified by the BNSIAR + 6 (from adder 251 of FIG. 5) to the BNSIAR + 133. (In certain boundary conditions, where the BNSIAR value is within 6 bytes of the end of a 128-byte block, the comparison range is slightly reduced and could be as low as BNSIAR + 128. This is because the implementation looks only at the 128-byte block that the BNSIAR value points to and the next block.) This range was chosen so as to be greater than the number of bytes that could be held in the I-fetch platform (currently 32). If a STIS occurs in this range, it is treated as a potential STIS condition. The STORE address from the BOAR of FIG. 2 is loaded into the STIS Address Register (STAR) 256 of FIG. 5, and the STAR valid bit in register 259 is asserted.

During each cycle, the BNSIAR is checked against the STAR if the STAR valid bit is set. Only wren enough sequential operations have occurred so the STAR is between the BNSIAR and the BNSIAR + 6 will the STIS condition is inserted. The potential STIS condition is not reported until the cycle before it would be used. Any branch taken invalidates the STAR since it would cause a re-I-fetch. If the instruction would have been branched around anyway, the potential STIS condition is ignored.

TABLE 1

STAR Register Usage (Basic Usage)

| | | | | | | | |
|---|---|---|---|---|---|---|---|
| Store @ 1050 | D | A | T | B | X | W | |
| LOAD @ 1054 | D | A | T | B | X | W | |
| LOAD @ 1058 | | D | A | T | B | X | |
| LOAD @ 105C | | | D | A | T | B | |
| LOAD @ 1060 | | | | D | A | T | |
| | | | | | | | |
| BOAR (last two bytes) | | x | 1060 | x | x | x | |
| BNSIAR (" " " ) | | 1050 | 1054 | 1058 | 105C | 1060 | |
| BNSIAR+6(" " " ) | | 1056 | 105A | 105E | 1062 | 1066 | |
| STAR ( " " " ) | | x | x | 1060 | 1060 | 1060 | |
| STAR valid | | 0 | 0 | 1 | 1 | 1 | |
| X STIS | | 0 | 0 | 0 | 1 | | |

TABLE 1 is an overview of STIS and the detailed control is indicated in the following equations. The STAR is updated if the current instruction store is between the BNSIAR and the STAR, since the current instruction store will cause a STIS condition sooner than the instruction that first caused the STAR to be loaded. The Updating of STAR is indicted in TABLE 2.

## TABLE 2

### STAR Register Usage (STAR Updated)

```
Store @ 1050      A     T     B     X     W
LOAD  @ 1054   D  A     T     B     X     W
STORE @ 1058      D     A     T     B     X
LOAD  @ 105C            D     A     T     B     X
LOAD  @ 1060                  D     A     T     B
LOAD  @ 1064                        D     A     T

BOAR (last two bytes)     x    1070    x    1068    x      x
BNSIAR ("    "    "  )   1050  1054   1058  105C   1060   1064
BNSIAR+6("    "    "  )  1056  105A   105E  1062   1066   106A
STAR    ( "   "    "  )    x     x    1070  1070   1068   1068
STAR valid                0     0     1     1      1      1
B STIS EVENT              0     0     0     0      0      1
```

When a branch occurs and is taken before the STAR is within range of the BNSIAR, a STIS event does not occur as indicted in TABLE 3.

## TABLE 3

### STAR Register Usage (Branch Taken)

```
Store @ 1050   D  A     T     B     X     W
LOAD  @ 1054   D  A     T     B     X     W
BRANCH @ 1058     D     A     T     B     X     W
LOAD  @ 105C            D     A     T
LOAD  @ 1060                  D     A
LOAD  @ 1064                        D
LOAD  @ 2000                              D     A
LOAD  @ 2004                                    D

BOAR (last two bytes)     x    1060    x    2000    x      x
BNSIAR ("    "    "  )   1050  1054   1058  105C    x      x
BNSIAR+6("    "    "  )  1056  105A   105E  1062    x      x
STAR    ( "   "    "  )    x     x    1060  1060    x      x
STAR valid                0     0     1     1       0      0
X STIS                    0     0     0     0       0      0
```

In TABLE 3, the BRANCH at 1058 is taken. The instructions at 105C, 1060 and 1064 are not executed. Instead, the instruction stream beginning at 2000 is executed.

The implementation of FIG. 5 reflects could employ full 32-hit registers. However, in FIG. 5, gate minimization avoids the use of full comparators. Instead, the registers being compared are checked to see if bits 1:24 are the same or off by one. If true, the registers are on the same STIS block or consecutive blocks of 128 bytes. Use of these convenient block sizes and boundaries causes the ranges specified above. This block format requires the STAR to have a flag signifying whether it is on the same page as the BNSIAR or the next, and that flag must be updated whenever the STAR is loaded or whenever the BNSIAR crosses a block boundary upon being updated. Also, the STAR is checked against only the BNSIAR + 6. It is a don't care if the STAR matches an address less than the BNSIAR but in the same block because it had to have been already detected as a STIS. In addition, bit 31 is a don't care and is not used. Various other don't cares appear throughout the STIS equations and logic.

1.1 STIS Condition Detection (STIS DETECTOR 257 of FIG. 5)

1.1.1 Current STIS (BOAR-BNSIAR overlap)

1. (BNSIAR+1 1:24 = BOAR) & (BOAR 25:30 < BNSIAR+6) & BNSIARWRAP

2. (BNSIAR 1:24 = BOAR) & (BOAR 25:30 < BNSIAR+6) & BOARWRAP & ⌐BNSIARWRAP

3. (BNSIAR 1:24 = BOAR) & (BOAR 25:30 < BNSIAR+6) & ⌐(BNSIAR 25:30 > INC BOAR) & ⌐BNSIARWRAP

4. (BOAR+1 1:24 + BNSIAR) & ⌐(BNSIAR 25:30 > INC BOAR) & BOARWRAP

5. (BNSIAR 1:24 = BOAR) & BOARWRAP & BNSIARWRAP

6. (BNSIAR 1:24 = BOAR) & ⌐(BNSIAR 25:30 > INC BOAR) & BNSIARWRAP

CURRENT STIS = (1+2+3+4+5+6) & (B CYCLE IS STORE OP) & ⌐(CANCEL B CYCLE) & (B RELEASE)

BOARWRAP and BNSIARWRAP means carry into bit 24 from their respective incrementors.

1.1.2. STIS from a Previous Store (BNSIAR-STAR overlap)

1. (STAR 1:24 = BNSIAR) & (STAR 25:30 < BNSIAR+6) ∗∗

2. (STAR 1:24 = BNSIAR) & BNSIARWRAP ∗∗

3. ⌐(STAR 1:24 = BNSIAR) & (STAR 25:30 < BNSIAR+6) & BNSIARWRAP

PREVIOUS STIS = (1+2+3) & (STAR VALID) & ⌐(CANCEL B CYCLE) & ⌐(BR TKN) & (B RELEASE)

∗∗ There are don't cares eliminated from these terms as noted later. X STIS EVENT = staged (CURRENT STIS or PREVIOUS STIS)

1.2 Loading the STAR (STAR CONTROL 258-FIG. 5)

1. ⌐(STAR VALID & ⌐BR TKN) & (BNSIAR 1:24 = BOAR) & ⌐(BOAR 25:30 < BNSIAR+6) & ⌐BNSIARWAP

6. ⌐(STAR VALID & ⌐BR TKN) & (BNSIAR+1 1:24 = BOAR) & BNSIARWRAP

2. ⌐(STAR VALID & ⌐BR TKN) & (BNSIAR+1 1:24 = BOAR) & (BOAR 25:30 < BNSIAR+6) & ⌐BNSIARWRAP

3. (BNSIAR 1:24 = BOAR) & ⌐(BOAR 25:30 < BNSIAR+6) & ⌐BNSIARWRAP & (BOAR 25:30 < STAR) & (STAR 1:24 = BNSIAR) ∗∗

4. (BNSIAR+1 1:24 = BOAR) & (BOAR 25:30 < STAR) & ⌐(STAR 1:24 = BNSIAR) & (BOAR 25:30 < BNSIAR+6) & ⌐BNSIARWRAP ∗∗

5. (BNSIAR 1:24 = BOAR) & ⌐(BOAR 25:30 < BNSIAR+6) & ⌐BNSIARWRAP & ⌐(STAR 1:24 = BNSIAR) ∗∗

7. (BNSIAR+1 1:24 = BOAR) & (BOAR 25:30 < STAR) & BNSIARWRAP ∗∗

LOAD STAR = (1+2+3+4+5+6+7) & (B CYCLE IS STORE OP) & ⌐(CANCEL B CYCLE) & (B RELEASE)

∗∗ There are don't cares eliminated from these terms as noted later.

1.3 Other STIS logic

1.3.1 STAR-BNSIAR Flag

(STAR 1:24 = BNSIAR) is implemented as a latch, not as a comparator. It is set and maintained by the following equation. Note that the latch is set each cycle for use in the following cycle. There is no way to accurately predict if the BNSIAR will cross a boundary that is not subject to cancellation. Therefore, there must be a copy of the previous BNSIAR's bit 24 latched and compared with the current BNSIAR's bit 24. If either the (STAR EQ BNSIAR) latch is set or BNSIAR bit 24 has changed sequentially, then for the purposes of the LOAD STAR equations (including their use below), the STAR bits 1:24 equal the BNSIAR bits 1:24.

SET STAR EQ BNSIAR =

((LOAD STAR TERM 1 or 5) & (BY CYCLE IS STORE OP) & ⌐(CANCEL B CYCLE) & (B RELEASE)) + ((STAR EQ BNSIAR) & ⌐(BR TKN)) + ∗∗∗

((STAR VALID) & ⌐(BR TKN) & (B RELEASE) & (BNSIAR<24> CHANGED)) where (BNSIAR<24> CHANGED) = (BNSIAR<24>) xor (OLD BNSIAR<24>)

∗∗∗ This term is the recirculate term.

(STAR 1:24 = BNSIAR) = (STAR EQ BNSIAR) + (BNSIAR<24> CHANGED)

1.3.2 Other Logic

1. (STAR VALID) & ⌐(STAR 1:24 = BNSIAR) implies (STAR 1:24 = BNSIAR+1)

2. The trigger for the OLD BNSIAR<24> latch is (B RELEASE) & ⌐(CANCEL B CYCLES)

3. SET STAR VALID = (LOAD STAR) + ((STAR VALID) & ⌐(BR TKN) & ⌐(CANCEL W CYCLE))

4. (STAR EQ BNSIAR) implies (STAR VALID)

5. A re-I-fetch will show up as a taken branch.

6. (B CYCLE IS STORE OP) means that the instruction in the B-cycle is a STORE and that the OP LEN JUST CODE (Store Length) is not zero.

7. Once a STIS has been detected, latched and sent to PC, the logic may still show detection of a STIS until it is reset by the re-I-fetch. This is a don't care, since the corresponding cycles will be cancelled anyway.

While the invention has been particularly shown and described with reference to preferred embodiments thereof it will be understood by those skilled in the art that various changes in form and details may be made therein without departing from the spirit and scope of the invention.

## Claims

1. A computer system having instructions, $I_1$, $I_2$, ..., $I_C$, ..., $I_J$ where "C" and "J" are integers, and where $I_1$ is the current one of said instructions being introduced into the pipeline, said instructions executed in a plurality of pipeline segments, including at least the segments $S_1$, $S_2$, ..., $S_W$ where "W" is an integer, said computer system comprising:

   current instruction address store means for storing the current address of the current instruction,

   next in sequence instruction address store means for storing the next in sequence address of the next in sequence instruction,

   signaling means responsive to a control signal for signaling when the instructions in the pipeline are to be purged,

   control means responsive to said next in sequence address and said current address for generating said control signal.

2. The computer system of Claim 1 wherein said control means includes means for detecting if said next in sequence address is for an address of an instruction already in the pipeline.

3. The computer system of Claim 1 wherein said control means includes,

   detection means for detecting if said next in sequence address is for an address of an instruction not already in the pipeline but with in a range of addresses close to addresses of instructions in said pipeline,

   checking means responsive to said detection means for generating said control signal if said next in sequence address is to become the next currrent instruction in the pipeline.

FIG.—1

| FIG 2 | FIG 4 |
| FIG 3 | |

FIG. —2

FIG.-3

FIG.—4

FIG.—5A

FIG.—5B

EP 0 550 289 A2

FIG.-6